# EUROPÄISCHE PATENTSCHRIFT

(11) **EP 2 772 647 B1**
(45) Veröffentlichungstag und Bekanntmachung des Hinweises auf die Patenterteilung: **25.02.2015**
(21) Anmeldenummer: 14156589.5
(22) Anmeldetag: 25.02.2014
(51) Int. Cl.: F03G 7/06

(54) **Drehstellantrieb**
Rotary actuator
Actuateur rotatif

(30) Priorität: 27.02.2013 CH 5112013
(43) Veröffentlichungstag der Anmeldung: 03.09.2014
(73) Patentinhaber: Unovatis GmbH, 38229 Salzgitter (DE)
(72) Erfinder: Niedbalski, Bruno, 4057 Basel (CH); Köhler, Ivo, 4057 Basel (CH); Fürbas, Michael, 78652 Deisslingen (DE)
(74) Vertreter: Bohest AG

(56) Entgegenhaltungen:
- EP-A1- 2 500 146
- WO-A1-2012/093567
- US-B1- 8 051 656

## Beschreibung

Die vorliegende Erfindung betrifft einen Drehstellantrieb für ein drehbares Bauteil gemäss dem Oberbegriff des unabhängigen Patentanspruchs 1.

Drehstellantriebe werden beispielsweise in der Heizungs-, Lüftungs- und Klimatechnik zur Betätigung von Luft-, Absperr- und Jalousienklappen verwendet. Sie weisen typischerweise ein drehbar angetriebenes Mitnehmerelement auf, an welches das anzutreibende bzw. zu stellende Bauelement, also z.B. eine Drehklappe, in geeigneter Weise angekoppelt werden kann, so dass das Bauelement über das Mitnehmerelement angetrieben bzw. verstellt werden kann.

In der DE 10 2011 016 962 A1 und WO 2006/105585 A1 ist eine Anordnung zum Drehen (Verstellen) einer in einer Rohrleitung eingebauten Klappe beschrieben. Hierbei sind zwei längliche Torsionsstäbe als Aktoren vorgesehen, die jeweils mit einem Ende fest mit der Rohrleitung verbunden sind und von zwei diametral gegenüberliegenden Punkten der Rohrinnenwand gegenseitig fluchtend radial nach innen ragen. An den inneren Enden sind die beiden Torsionsstäbe fest mit der Klappe verbunden. Die Torsionsstäbe bilden also die Drehaufhängung der Klappe in der gewissermassen einen Stator bildenden Rohrleitung.

Die beiden Torsionsstäbe bestehen aus einer Formgedächtnislegierung und gehen durch Erwärmung je von einer ersten eingeprägten Form ("Kalt-Form") kontinuierlich in eine zweite eingeprägte Form ("Warm-Form") über, wobei sich ihre inneren Enden um ihre Längsrichtung gegenüber den äusseren, ortsfesten Enden verdrehen. Die Verdrehungsrichtungen der beiden Torsionsstäbe sind gegenläufig. Auf den beiden Torsionsstäben ist je ein elektrisches Heizelement zum unabhängigen Erwärmen der beiden Torsionselemente angeordnet. In einer Enddrehstellung der Klappe weist ein Torsionsstab seine Kalt-Form und der andere seine Warm-Form auf, in der anderen Enddrehstellung ist es umgekehrt. Durch Beaufschlagung des Heizelements des seine Kalt-Form einnehmenden Torsionsstabs mit elektrischem Strom wird dieser Torsionsstab erwärmt und verdreht damit die Klappe von ihrer einen Enddrehstellung in ihre andere Enddrehstellung. Gleichzeitig wird der andere, seine Warm-Form einnehmende Torsionsstab verdreht und dabei wieder in seine Kalt-Form übergeführt. Die beiden Torsionsstäbe arbeiten also gegenläufig. Zwischenpositionen der Klappe können durch mehrfaches Ein- und Ausschalten des jeweiligen Heizelements eingestellt werden. Dies kann z.B. mittels eines mit der Klappe verbundenen elektronischen Drehwinkelgebers und einer entsprechenden elektronischen Steuerung realisiert werden.

Damit das eine bzw. das andere Heizelement nicht weiter bestromt werden muss, wenn sich die Klappe in ihrer einen bzw. anderen Enddrehstellung befindet, kann ein nicht näher erläuterter Haltemechanismus vorgesehen sein, welcher die Klappe in ihren beiden Enddrehstellungen festhält. Der Haltemechanismus kann auch an einen die Stromzufuhr zum jeweiligen Heizelement unterbrechenden Schalter gekoppelt sein.

Ein wesentlicher Nachteil der in der DE 10 2011 016 962 A1 beschriebenen Anordnung besteht darin, dass die Heizelemente ständig bestromt werden müssen, wenn die Klappe in einer Zwischendrehstellung gehalten werden soll.

Der Erfindung liegt daher die Aufgabe zugrunde, einen Drehstellantrieb der gattungsgemässen Art dahingehend zu verbessern, dass jede erreichbare Drehstellung ohne Bestromung der Heizelemente der Torsionselemente gehalten werden kann.

Diese Aufgabe wird durch den erfindungsgemässen Drehstellantrieb gelöst, wie er im unabhängigen Patentanspruch 1 definiert ist. Bevorzugte Ausführungsvarianten ergeben sich aus den abhängigen Patentansprüchen.

Das Wesen der Erfindung besteht im Folgenden: Ein Drehstellantrieb für ein drehbares Bauteil umfasst einen Stator und zwei im Wesentlichen zu einer Drehachse koaxiale, gegenläufig wirkende Drehaktoren in Form von zwei strangförmigen Torsionselementen mit je einem bezüglich des Stators ortsfesten Einspannende und je einem Antriebsende. Die Torsionselemente bestehen aus einer Formgedächtnislegierung und gehen durch Erwärmung je von einer ersten eingeprägten Form kontinuierlich in eine zweite eingeprägte Form über, wobei sich jeweils das Antriebsende um die Drehachse gegenüber dem Einspannende verdreht. Zwei elektrische Heizmittel sind je einem der beiden Torsionselemente zum voneinander unabhängigen Erwärmen derselben zugeordnet. Der Drehstellantrieb umfasst ferner einen um die Drehachse zwischen einer ersten und einer zweiten Enddrehposition drehbaren Rotor, der mit den Antriebsenden der beiden Torsionselemente so kinematisch gekoppelt ist, dass er durch Erwärmung des einen Torsionselements in einer ersten Drehrichtung und durch Erwärmung des anderen Torsionselements in einer entgegengesetzten zweiten Drehrichtung gedreht wird. Der Drehstellantrieb weist ferner selbsttätig wirkende lösbare kraftschlüssige Drehsperrmittel auf, welche den Rotor in seiner momentanen Drehposition festhalten, wenn die elektrischen Heizmittel nicht mit Strom beaufschlagt sind, und welche über die Torsionselemente lösbar sind, wenn deren zugeordnete Heizmittel mit Strom beaufschlagt sind.

Durch die selbsttätig wirkenden kraftschlüssigen Drehsperrmittel kann der Rotor in jeder beliebigen Drehposition festgehalten werden, ohne dass dazu das jeweils betreffende Torsionselement weiter beheizt werden muss.

Gemäss einer bevorzugten Ausführungsform umfassen die Drehsperrmittel zwei gegensinnig wirkende, mit dem Rotor gekoppelte Sperrfedern, die eine Drehung des Rotors in je einer Drehrichtung blockieren.

Konstruktiv besonders zweckmässig ist es, wenn die Drehsperrmittel zwei zum Rotor koaxiale, bezüglich des Stators ortsfeste Sperrhülsen aufweisen, um welche je eine der beiden Sperrfedern straff gewickelt ist und auf der Sperrhülse im Reibschluss relativ zu dieser unbeweglich sitzt, wobei die Sperrfedern jeweils ein erstes und ein zweites Ende aufweisen und wobei durch Bewegung des ersten oder zweiten Endes der Sperrfedern entgegen deren Wickelrichtung der Sitz der Sperrfedern auf den Sperrhülsen soweit lockerbar ist, dass sich die Sperrfedern auf den Sperrhülsen relativ zu diesen drehen lassen.

Weiters ist es dabei zweckmässig, wenn jeweils das erste Ende der Sperrfedern im Rotor eingespannt ist und jeweils das zweite Ende der Sperrfedern über je eines der beiden Torsionselemente in Umfangsrichtung entgegen dem jeweiligen Wickelsinn der Sperrfedern relativ zum ersten Ende begrenzt bewegbar ist, wobei jeweils durch eine Bewegung des zweite Endes der Sitz der Sperrfeder auf der Sperrhülse soweit gelockert wird, dass sich die Sperrfeder auf der Sperrhülse relativ zu dieser drehen lässt.

Besonders vorteilhafterweise weist der Drehstellantrieb Kupplungsmittel zur Drehverbindung der Torsionselemente mit dem Rotor auf, welche Kupplungsmittel dazu ausgebildet sind, den Rotor von den Torsionselementen, wenn deren zugeordnete Heizmittel nicht mit Strom beaufschlagt sind, so zu entkoppeln, dass sich auf den Rotor einwirkende äussere Drehmomente nicht auf die Torsionselemente übertragen. Dadurch wird auf einfache Weise eine Schädigung der Torsionselemente vermieden.

Konstruktiv besonders zweckmässig ist es, wenn an den Antriebsenden der beiden Torsionselemente je eine Mitnehmerscheibe drehfest verbunden angeordnet ist, wenn die Mitnehmerscheiben und der Rotor je mindestens einen Mitnehmernocken aufweisen, und wenn der Rotor über diese Mitnehmernocken mit den Mitnehmerscheiben kinematisch koppelbar ist.

Aus Gründen einer einfachen und kompakten Bauweise ist es vorteilhaft, wenn sich die Mitnehmernocken der Mitnehmerscheiben radial auswärts erstrecken und sich der mindestens eine Mitnehmernocken des Rotors radial einwärts erstreckt.

Gemäss einer bevorzugten Ausführungsvariante sind die Mitnehmerscheiben koaxial und benachbart angeordnet und weisen je zwei diametral gegenüberliegend angeordnete Anschlagnocken auf, die sich von den Mitnehmerscheiben weg in Richtung auf die jeweils andere Mitnehmerscheibe hin erstrecken und gegenseitige Drehwegbegrenzungen der beiden Mitnehmerscheiben bilden.

Vorteilhafterweise weist der Drehstellantrieb zwei Kraftkompensationsfedern zur Zurückführung der beiden Torsionselemente in ihre jeweilige Kalt-Form auf. Dadurch kann die Zurückführung unmittelbar nach Unterbrechung der Wärmezufuhr zu den Torsionselementen erfolgen, wobei geringere Kräfte erforderlich sind und ein höheres Drehmoment erzielt werden kann.

Zweckmässigerweise sind dabei die Kraftkompensationsfedern einerseits bezüglich des Stators ortsfest gehalten und anderseits mit je einer der beiden Mitnehmerscheiben mitdrehbar verbunden, wobei die Kraftkompensationsfedern mittels der Mitnehmerscheiben spannbar sind und anderseits die Mitnehmerscheiben durch Entspannung der Kraftkompensationsfedern drehend antreibbar sind.

Im Folgenden wird der erfindungsgemässe Drehstellantrieb anhand eines in den Zeichnungen dargestellten Ausführungsbeispiels detaillierter beschrieben. Es zeigen:
- Fig. 1 -: eine Ausführungsbeispiel eines erfindungsgemässen Drehstellantriebs in einer Perspektivansicht;
- Fig. 2 -: eine Perspektivansicht analog Fig. 1, jedoch mit entferntem GehäuseOberteil;
- Fig. 3 -: eine Perspektivansicht analog Fig. 1, jedoch ohne alle Gehäuseteile;
- Fig. 4-6 -: je eine Perspektivansicht diverser Funktionskomponenten;
- Fig. 7 -: einen axialen Schnitt im Wesentlichen nach der Ebene VII-VII der Fig. 2;
- Fig. 8-13 -: je eine Detailansicht des Rotors und der mit diesem zusammenwirkenden Funktionskomponenten in Richtung des Pfeils P der Fig. 7 in verschiedenen Drehstellungen der dargestellten Komponenten und
- Fig. 14 -: eine Perspektivansicht des Rotors des Drehstellantriebs.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

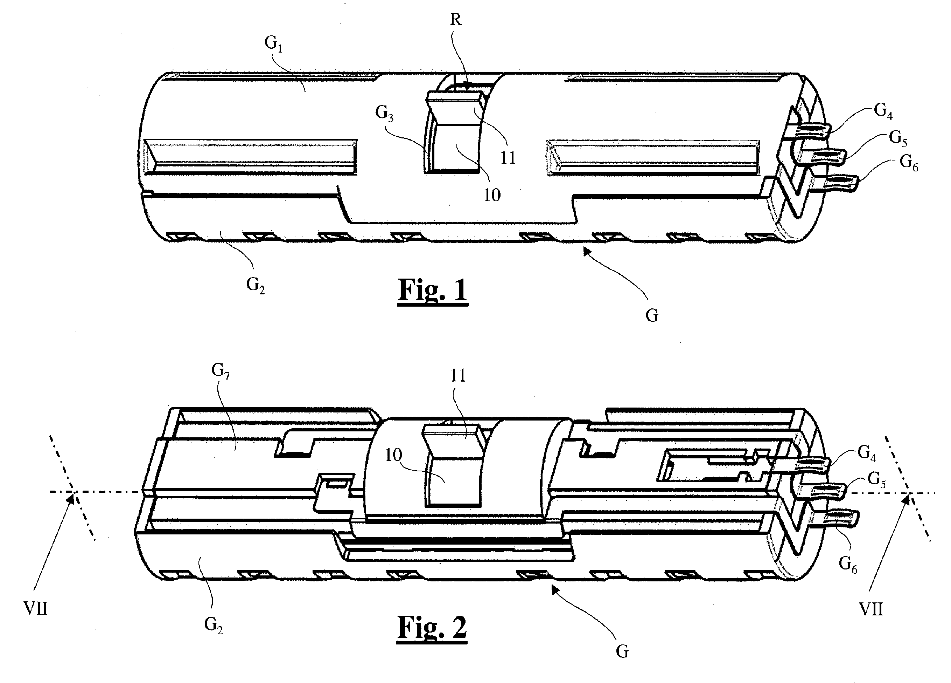

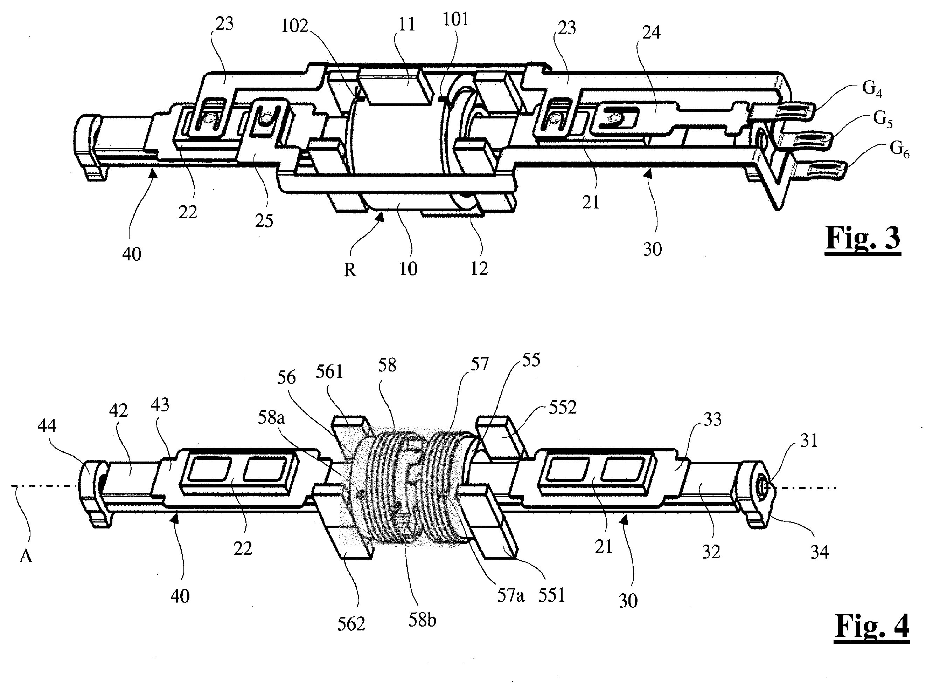

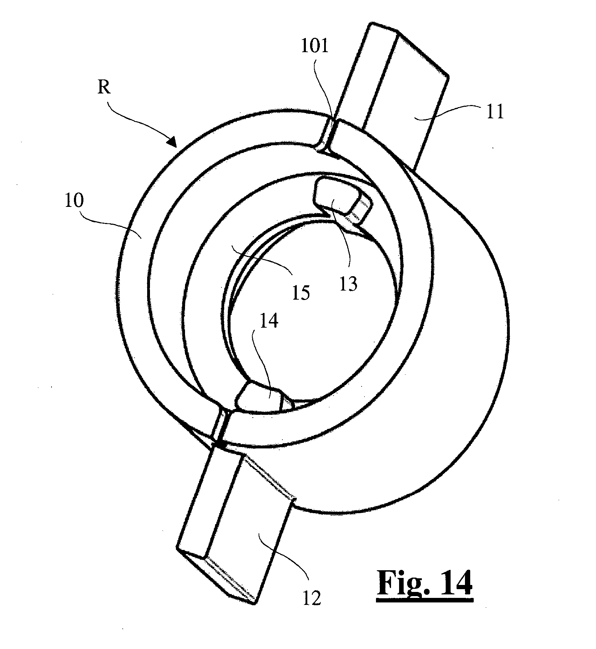

Gemäss der allgemeinen Ansicht der Fig. 1 umfasst der erfindungsgemässe Drehstellantrieb im hier erläuterten Ausführungsbeispiel einen Stator in Form eines im Wesentlichen zylindrischen Gehäuses G, das sich aus einem Oberteil G₁ und einem Unterteil G₂ zusammensetzt. Im Inneren des Gehäuses G ist ein Rotor R um eine Drehachse A (Fig. 4), die mit der Gehäuseachse zusammenfällt, drehbar gelagert. Der Rotor R besitzt einen hülsenförmigen Rotorkörper 10, der durch zwei diametral gegenüberliegend im Mittelteil des Gehäuses G ausgesparten Fenstern G₃ sichtbar ist. Die beiden Fenster G₃, von denen in der Zeichnung nur eines dargestellt ist, erstrecken sich in Umfangsrichtung des Gehäuses G über etwas mehr als 90°. Der Rotor R besitzt zwei diametral gegenüberliegende Mitnehmerlaschen 11 und 12, die radial vom Rotorkörper 10 abstehen und sich durch je eines der beiden Fenster G₃ des Gehäuses G heraus erstrecken (siehe auch Fig. 14). Das Gehäuse G bildet einen (für ortsfeste Montage vorgesehenen) Stator des Drehstellantriebs. Der Rotor R ist das eigentliche, nach aussen wirkende antreibende Element des Drehstellantriebs, wobei zur Ankopplung eines anzutreibenden Bauteils, beispielsweise einer Luftklappe, die beiden Mitnehmerlaschen 11 und 12 vorgesehen sind. An der in der Fig. 1 rechten Stirnseite des Gehäuses G sind drei elektrische Anschlüsse G₄, G₅ und G₆ angeordnet, über welche im Inneren des Gehäuses angeordnete, weiter unten noch erläuterte elektrische Heizmittel 21 und 22 (Fig. 4) mit Strom versorgt werden können.

In Fig. 2 ist der Drehstellantrieb mit abgenommenen Gehäuseoberteil G₁ dargestellt. Im Inneren des Gehäuses G befindet sich ein Zwischengehäuse G₇, das die weiter innen liegenden Funktionselemente des Drehstellantriebs beherbergt bzw. teilweise abdeckt. Das Zwischengehäuse G₇ ist für das Verständnis des erfindungsgemässen Drehstellantriebs ohne Bedeutung und ist daher hier nicht weiter erläutert.

Die Fig. 3 zeigt den Drehstellantrieb ohne alle Gehäuseteile. Man erkennt den Rotorkörper 10 und die Mitnehmerlaschen 11 und 12 des Rotors R, die beiden schon genannten elektrischen Heizmittel 21 und 22 und drei elektrische Leitungselemente 23, 24 und 25, die die Heizmittel 21 und 22 mit den drei elektrischen Anschlüssen G₄, G₅ und G₆ verbinden.

Die einzelnen Funktionskomponenten des Drehstellantriebs sind in den Figuren 4-6 deutlicher erkennbar. In diesen Figuren sind jeweils einige Komponenten weggelassen, so dass die unter bzw. in ihnen angeordneten Komponenten sichtbar sind.

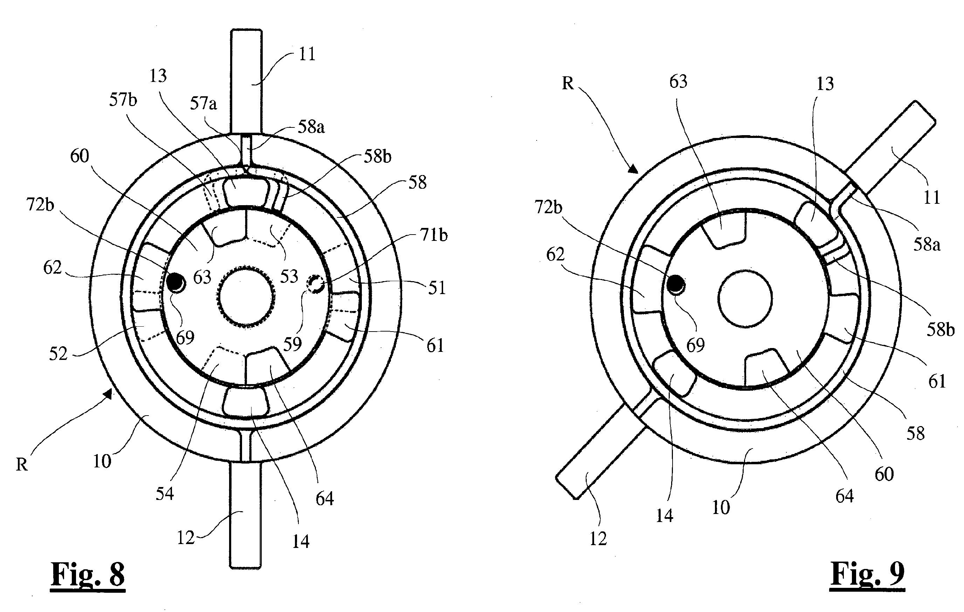

Fig. 4 zeigt zwei koaxial zur schon genannten Drehachse A ausgerichtete Aktoreinheiten 30 und 40. Zwischen den beiden Aktoreinheiten sind vier ortsfest im (hier nicht dargestellten) Gehäuse G angeordnete Sperrhülsenträger 551, 552, 561 und 562 zu erkennen, an denen zwei zylindrische, zur Drehachse A koaxiale Sperrhülsen 55 und 56 befestigt sind, so dass die Sperrhülsen im Gehäuse bzw. Stator G ortsfest sind. Auf den beiden Sperrhülsen 55 und 56 ist je eine Sperrfeder 57 bzw. 58 angeordnet. Die beiden Sperrfedern 57 und 58 sind sehr straff gewickelt und klemmen sich (in Abwesenheit auf sie wirkender Entsperrkräfte) so fest an die Oberflächen der beiden Sperrhülsen 55 und 56, dass sie in diesem Zustand mit den Sperrhülsen kraftschlüssig verbunden und relativ zu diesen bewegungsstarr sind. Die einander abgewandten Enden 57a und 58a der Sperrfedern 57 bzw. 58 ragen radial nach aus sen und greifen in radiale Aufnahmeöffnungen 101 bzw. 102 (siehe Figuren 3 und 14) am hülsenförmigen Rotorkörper 10 hinein. Sie sind dadurch drehfest mit dem Rotor R verbunden. Die einander zugewandten Enden 57b und 58b der Sperrfedern 57 bzw. 58 ragen radial nach innen (siehe auch Fig. 8). Die beiden Sperrfedern 57 und 58 bilden zusammen mit den sie tragenden Sperrhülsen 55 und 56 entsperrbare bzw. lösbare Drehsperrmittel, deren Wirkungsweise und Funktion weiter unten noch näher erläutert wird.

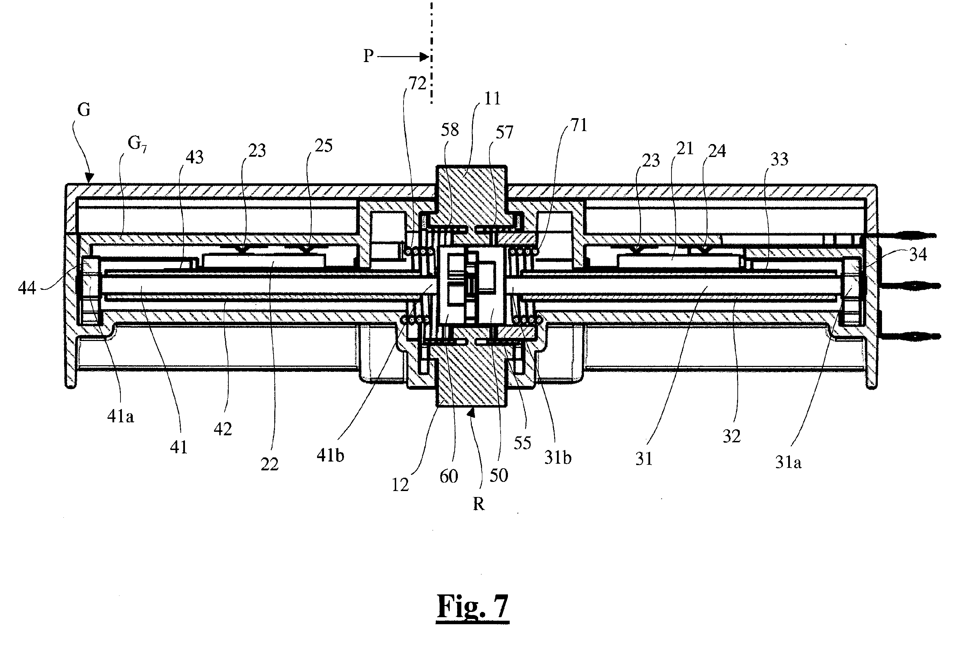

Wie aus der Schnittdarstellung der Fig. 7 zu sehen ist, umfassen die beiden Aktoreinheiten 30 und 40 je ein längliches bzw. strangförmiges Torsionselement 31 bzw. 41, das jeweils von einem gut wärmeleitfähigen Mantel 32 bzw. 42 umschlossen ist. Im gezeigten Ausführungsbeispiel sind die beiden Torsionselemente 31 und 41 als zylindrische Stäbe bzw. Drähte ausgebildet. Die beiden Mäntel 32 und 42 haben aussen abgeflachte Oberflächen, auf denen die beiden Heizmittel 21 bzw. 22 je unter Zwischenlage eines Wärmeleitmittels 33 bzw. 43, beispielsweise einer Wärmeleitfolie, montiert sind (siehe auch Figuren 4-6). Die Heizmittel 21 und 22 sind vorzugsweise als PCT-Widerstände ausgebildet.

Aus Fig. 7 ist weiter erkennbar, dass die beiden Torsionselemente 31 und 41 an ihren einander abgewandten Enden, die im Folgenden als Einspannenden 31a bzw. 41a bezeichnet sind, in einem Spannblock 34 bzw. 44 gehaltert sind. Die Einspannenden 31a und 41a sind verdrehungsfest in den beiden Spannblöcken 34 und 44 befestigt und die letzteren sind ortsfest im Gehäuse bzw. Stator G montiert, so dass also die beiden Torsionselemente 31 und 41 mit ihren Einspannenden 31a bzw. 41a drehfest im Gehäuse bzw. Stator G gelagert sind. Die beiden Spannblöcke 34 und 44 sind deutlicher in den Figuren 4-6 erkennbar.

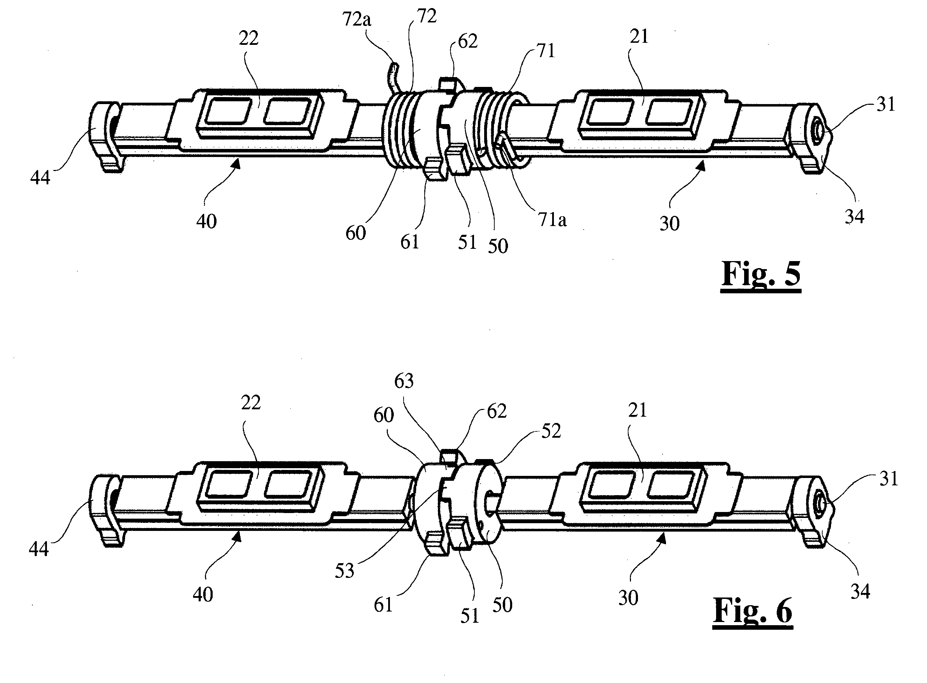

An den den Einspannenden 31a und 41a gegenüberliegenden und im Folgenden als Antriebsenden 31b bzw. 41b bezeichneten Enden der beiden Torsionselemente 31 und 41 ist je eine Mitnehmerscheibe 50 bzw. 60 drehfest koaxial befestigt. Am besten ist dies aus Fig. 6 sowie der Schnittdarstellung der Fig. 7 erkennbar. Auf die Funktion der beiden Mitnehmerscheiben 50 und 60 wird weiter unten noch eingegangen.

Zu beiden Seiten der Mitnehmerscheiben 50 und 60 ist je eine als Schraubenfeder ausgebildete Kraftkompensationsfeder 71 bzw. 72 angeordnet, siehe Figuren 5 und 7. Die einander abgewandten Enden 71a und 72a der Kraftkompensationsfedern 71 und 72 sind in den Sperrhülsenträgern 551 bzw. 561 festgelegt und damit ortsfest. Die beiden einander zugewandten, in Fig. 8 nur angedeuteten Enden 71b und 72b der Kraftkompensationsfedern 71 und 72 verlaufen achsparallel und greifen je in eine Öffnung 59 bzw. 69 der Mitnehmerscheibe 50 bzw. 60 ein, so dass sie mit den Mitnehmerscheiben 50 bzw. 60 auf Drehung gekoppelt sind. Die Wirkungsweise dieser beiden Kraftkompensationsfedern wird weiter unten noch erläutert.

Die Torsionselemente 31 und 41 bestehen aus einer Formgedächtnislegierung und gehen durch Erwärmung je von einer ersten eingeprägten Form ("Kalt-Form") kontinuierlich in eine zweite eingeprägte Form ("Warm-Form") über, wobei sich ihre inneren Antriebsenden 31b und 41b um ihre Längsrichtung bzw. die Drehachse A gegenüber den äusseren, ortsfesten Einspannenden 31a und 42a verdrehen. Die Verdrehungsrichtungen der beiden Torsionsstäbe sind gegenläufig. Für die voneinander unabhängige Erwärmung der beiden Torsionselemente 31 und 41 sind die beiden elektrischen Heizmittel 21 und 22 vorgesehen, wobei die von diesen erzeugte Wärmeenergie über die Wärmeleitmittel 33 und 43 sowie die Mäntel 32 und 42 den Torsionselementen 31 und 41 zugeführt wird. Die Drehbewegung der Antriebsenden 31b und 41b der Torsionselemente 31 und 41 wird unmittelbar auf die mit den Antriebsenden drehfest verbundenen Mitnehmerscheiben 50 und 60 übertragen. Die eigentlichen Aktoren im engeren Sinn sind die beiden Torsionselemente 31 und 41, deren Verdrehungsbewegung in der nachfolgend erläuterten Weise über die Mitnehmerscheiben 50 und 60 auf den Rotor R übertragen wird.

Wie am besten aus den Figuren 5, 6 und 8 erkennbar ist, sind die beiden Mitnehmerscheiben 50 und 60 je mit zwei Mitnehmernocken 51 und 52 bzw. 61 und 62 versehen, welche diametral gegenüberliegend vom Umfangsrand der Mitnehmerscheiben radial herausragen. Ferner weisen die Mitnehmerscheiben 50 und 60 noch je zwei diametral gegenüberliegend angeordnete Anschlagnocken 53 und 54 bzw. 63 und 64 auf, welche sich von den Mitnehmerscheiben achsparallel weg in Richtung auf die jeweils andere Mitnehmerscheibe hin erstrecken. Die beiden Mitnehmerscheiben 50 und 60 sind so nahe beieinander angeordnet, dass ihre Anschlagnocken ineinandergreifen können und so gegenseitig Anschläge bilden, welche die Relativbewegung der beiden Mitnehmerscheiben zueinander begrenzen, beispielsweise auf ungefähr +/- 120°.

Der Rotorkörper 10 des Rotors R ist ebenfalls mit zwei diametral gegenüberliegenden Mitnehmernocken 13 und 14 versehen, die sich jedoch radial nach innen erstrecken und knapp bis zum Umfangsrand der beiden Mitnehmerscheiben 50 und 60 reichen (Fig. 8). In der Perspektivansicht der Fig. 14 ist die Ausbildung und Anordnung der beiden Mitnehmernocken 13 und 14 deutlicher zu erkennen. Die beiden Mitnehmernocken 13 und 14 sind an einer ringförmigen Rippe 15 an der Innenwand des Rotorkörpers 10 angeordnet und sind in axialer Richtung so lange, dass sie über beiden Mitnehmerscheiben 50 und 60 zu liegen kommen. Die Mitnehmernocken 51, 52, 61 und 62 der Mitnehmerscheiben 50 bzw. 60 greifen zwischen die Mitnehmernocken 13 und 14 des Rotorkörpers 10 ein und können je nach Drehstellung der Mitnehmerscheiben 50 und 60 relativ zum Rotorkörper 10 mit den Mitnehmernocken 13 und 14 des letzteren in Eingriff kommen, wobei dann die Drehbewegung der Mitnehmerscheiben 50 und 60 auf den Rotorkörper 10 und damit den Rotor R als Ganzen übertragen wird. Die Mitnehmerscheiben 50 und 60 mit ihren Mitnehmernocken 51 und 52 bzw. 61 und 62 und der Rotorkörper 10 mit seinen Mitnehmernocken 13 und 14 bilden somit Kupplungsmittel zur Drehverbindung der Torsionselemente 31 und 41 mit dem Rotor R. Wie nachstehend noch erläutert ist, sind diese Kupplungsmittel auch in der Lage, den Rotor R von den Torsionselementen 31 und 41 in der Weise zu entkoppeln, dass auf den Rotor R (z.B. über das angetriebene Bauteil) einwirkende äussere Kräfte bzw. Drehmomente nicht auf die Torsionselemente 31und 41 rückwirken können, wenn deren zugeordnete Heizmittel 21 und 22 nicht mit Strom beaufschlagt sind, die Torsionselemente also kalt oder in der Abkühlphase sind.

Im Folgenden ist das Zusammenwirken der einzelnen Komponenten des Drehstellantriebs anhand der Figuren 8-13 erläutert.

Die Fig. 8 zeigt den Rotor, die Mitnehmerscheiben und die Sperrfedern in einer Montageposition, die für die Funktion bedeutungslos ist und im Wesentlichen nur zur Identifikation der einzelnen Komponenten dient.

Zum besseren Verständnis sei vorausgeschickt, dass die Sperrrichtungen der beiden Sperrfedern 57 und 58 entgegengesetzt sind. Bezogen auf die Darstellungen der Figuren 8-13 verhindert die Sperrfeder 57 (im nicht entsperrten Zustand) eine Verdrehung des Rotors R im Uhrzeigersinn und die Sperrfeder 58 eine Verdrehung entgegen dem Uhrzeigersinn.

In Fig. 9 sind der Rotor, die Mitnehmerscheiben und die Sperrfedern in einer ersten vordefinierten Enddrehposition des Rotors R dargestellt. Die beiden hier nicht dargestellten Torsionselemente nehmen ihre Kalt-Stellung ein. Das Ende 58b der Sperrfeder 58 befindet sich frei zwischen dem Mitnehmernocken 61 der Mitnehmerscheibe 60 und dem Mitnehmernocken 13 des Rotors R. Das Ende 57b der Sperrfeder 57 befindet sich frei zwischen dem Mitnehmernocken 52 der Mitnehmerscheibe 50 und dem Mitnehmernocken 13 des Rotors R, was allerdings in Fig. 9 nicht dargestellt ist. Die beiden Anschlagnocken 63 und 64 der Mitnehmerscheibe 60 befinden sich, wie in Fig. 8 dargestellt, in Anlage an den nicht sichtbaren Anschlagnocken 53 bzw. 54 der Mitnehmerscheibe 50. Die beiden Sperrledern 57 und 58 befinden sich in ihren sperrenden Zuständen, so dass der Rotor bezüglich beider Drehrichtungen festgehalten ist.

Um den Rotor R aus der Enddrehposition gemäss Fig. 9 herauszubewegen, wird das Heizmittel 22 mit elektrischem Strom beaufschlagt und dadurch das Torsionselement 41 erwärmt. Dadurch verdrehen sich sein Antriebsende 41b und die mit diesem verbundene Mitnehmerscheibe 60 entgegen dem Uhrzeigersinn (in der Ansicht der Figuren 8-13).

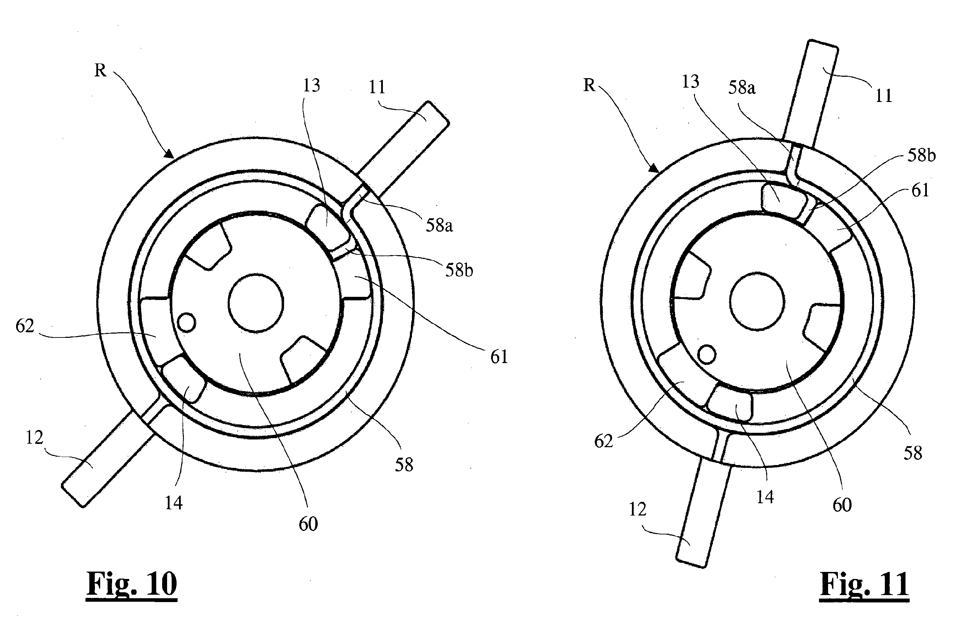

Durch die Verdrehung der Mitnehmerscheibe 60 kommt deren Mitnehmernocken 61 in Anlage an das Ende 58b der Sperrfeder 58 und verstellt dieses in Umfangsrichtung, bis es schliesslich in Anlage an den Mitnehmernocken 13 des zunächst noch feststehenden Rotors R kommt. Gleichzeitig kommt der gegenüberliegende Mitnehmernocken 62 der Mitnehmerscheibe 60 in Anlage an den anderen Mitnehmernocken 14 des Rotors (Fig. 10).

Durch die (geringfügige) Bewegung des Endes 58b der Sperrfeder 58 entgegen deren Wickelrichtung wird der Sitz der Sperrfeder auf der (hier nicht gezeigten) Sperrhülse 56 soweit gelockert, dass sich die Sperrfeder 58 auf der Sperrhülse 56 verdrehen lässt und damit eine Verdrehung des Rotors R ermöglicht. Die Sperrfeder 58 wird also entsperrt oder gelöst.

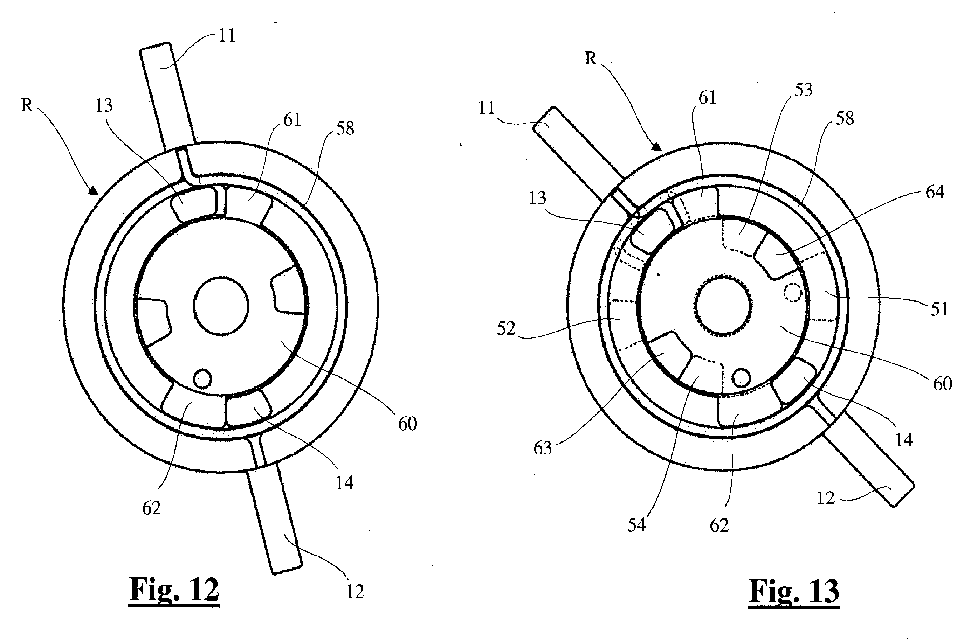

Bei der weiteren Verdrehung der Mitnehmerscheibe 60 wird nun der Rotor R durch den Mitnehmernocken 61 über das Sperrfederende 58b einerseits und durch den Mitnehmernocken 62 mit der Mitnehmerscheibe 60 mitgedreht. Die hier nicht dargestellte andere Sperrfeder 57 auf der Sperrhülse 55 stellt dabei kein Hindernis dar, weil einerseits ihr inneres Ende 57b zwischen den beiden Mitnehmernocken 51 und 52 der Mitnehmerscheibe 50 frei beweglich ist und weil anderseits ihr äusseres, am Rotor R festgelegtes Ende 57a entgegen der Sperrrichtung der Sperrfeder 57 bewegt wird (Figuren 11 und 12).

Die Mitnehmerscheibe 50 steht während der gesamten Verdrehung der Mitnehmerscheibe 60 still. Bei der Verdrehung der Mitnehmerscheibe 60 wird die Kraftkompensationsfeder 72 gespannt.

Die Verdrehung der Mitnehmerscheibe 60 und damit des Rotors R erfolgt (falls dies die Anwendung erfordert) so lange, bis der Rotor R seine vordefinierte zweite Enddrehposition erreicht hat (Fig. 13). In dieser Drehposition befinden sich die Anschlagnocken 63 und 64 der Mitnehmerscheibe 60 in Anlage an den Anschlagnocken 54 bzw. 53 der Mitnehmerscheibe 50 und verhindern so eine weitere Verdrehung.

Wenn der Rotor R seine zweite Enddrehposition erreicht hat, wird die Stromzufuhr zum Heizmittel 22 unterbrochen, sodass das Torsionselement 41 abkühlt. Die zuvor gespannte Kraftkompensationsfeder 72 dreht nun die Mitnehmerscheibe 60 in ihre Ausgangslage zurück, wodurch das Torsionselement 41 wieder in seine Kalt-Form übergeführt wird. Mit der Rückwärtsdrehung der Mitnehmerscheibe 60 kommt das Ende 58b der Sperrfeder 58 wieder vom Mitnehmernocken 13 des Rotors R frei und die Entsperrung der Sperrfeder 58 wird dadurch wieder aufgehoben. Der Rotor R wird auf diese Weise von der Sperrfeder 57 und der Sperrfeder 58 in seiner aktuellen Drehposition festgehalten.

Die Drehbewegung des Rotors R in die entgegengesetzte Richtung funktioniert analog zu den vorstehenden Ausführungen, wobei aber das Torsionselement 31 den Antrieb bewirkt und die Rollen der Mitnehmerscheiben 50 und 60 mit ihren Mitnehmernocken 51, 52 bzw. 61, 62 und Anschlagnocken 53, 54 bzw. 63,64 und der Sperrfedern 57 und 58 sowie der Kraftkompensationsfedern 71 und 72 sinngemäss vertauscht sind.

Selbstverständlich ist es auch möglich, den Rotor R in jeder beliebigen Zwischendrehposition rastfrei durch Unterbrechung der Stromzufuhr zum einen bzw. anderen der beiden Heizmittel 21 und 22 anzuhalten. Sobald das entsprechende Heizmittel 21 bzw. 22 nicht mehr mit elektrischem Strom beaufschlagt wird, ergeben sich dieselben Abläufe wie in der jeweiligen Enddrehposition und der Rotor R wird von den beiden Sperrfedern 57 und 58 kraftschlüssig festgehalten.

Aus den vorstehenden Erläuterungen geht hervor, dass der Rotor R nur während der Zuführung von Wärme zum jeweiligen Torsionselement 31 bzw. 41 in Drehverbindung besteht. Ohne Bestromung der Heizmittel 21 und 22 bzw. ohne Wärmezufuhr zu den Torsionselementen 31 bzw. 41, also in der Kaltphase oder der Abkühlungsphase der letzteren, sind die Mitnehmernocken 51, 52, 61 und 62 der beiden Mitnehmerscheiben 50 bzw. 60 nicht in Kontakt mit den Mitnehmernocken 13 und 14 des Rotors R, so dass der Rotor R die Mitnehmerscheiben 50 und 60 in diesem Zustand nicht bewegen kann. Ausserdem ist der Rotor R jeweils von den beiden Sperrfedern 57 und 58 gegen Verdrehung gesichert. Auf diese Weise wird eine Entkopplung zwischen dem Rotor R und den Mitnehmerscheiben 50 und 60 und damit auch den Torsionselementen 31 und 41 erreicht. Dadurch wird verhindert, dass auf den Rotor R (z.B. über das angetriebene Bauteil) einwirkende äussere Kräfte bzw. Drehmomente auf die Torsionselemente 31 und 41 rückwirken und diese schädigen können.

Zum vorbeschriebenen Drehstellantrieb sind weitere konstruktive Variationen realisierbar. Insbesondere ist zu erwähnen, dass die Kraftkompensationsfedern 71 und 72 für die Funktion des Drehstellantriebs nicht zwingend erforderlich sind. Ohne diese Kraftkompensationsfedern 71 und 72 erfolgt die Rückstellung des Torsionselements 31 bzw. 41 über das jeweils andere Torsionselement 41 bzw. 31 und die Mitnehmerscheiben 60 und 50. Die Rückstellung über die Kraftkompensationsfedern 71 und 72 ist aber insofern vorteilhaft, als mit der sofortigen Rückstellung der Torsionselemente 31 und 41 nach der beheizten Phase derselben, also nach dem Abschalten des Heizstroms, geringere Rückstellkräfte erforderlich sind als im völlig abgekühlten Zustand der Torsionselemente. In der Gesamtkräfte- oder Drehmomentbetrachtung hat diese Rückstellkraft einen direkten Einfluss auf das maximal erzeugbare Drehmoment während der Wärmezufuhr. Je weniger Rückstellkraft benötigt wird, desto mehr Drehmoment steht zur Verfügung.

## Patentansprüche

1. Drehstellantrieb für ein drehbares Bauteil, mit einem Stator (G) und zwei im Wesentlichen zu einer Drehachse (A) koaxialen, gegenläufig wirkenden Drehaktoren in Form von zwei strangförmigen Torsionselementen (31, 41) mit je einem bezüglich des Stators (G) ortsfesten Einspannende (31a, 41a) und je einem Antriebsende (31b, 41b), wobei die Torsionselemente (31, 41) aus einer Formgedächtnislegierung bestehen und durch Erwärmung je von einer ersten eingeprägten Form kontinuierlich in eine zweite eingeprägte Form übergehen, wobei sich jeweils das Antriebsende (31b, 41b) um die Drehachse (A) gegenüber dem Einspannende (31a, 41a) verdreht, und mit zwei je einem der beiden Torsionselemente (31, 41) zugeordneten elektrischen Heizmitteln (21, 22) zum voneinander unabhängigen Erwärmen der beiden Torsionselemente (31, 41), **dadurch gekennzeichnet, dass** der Drehstellantrieb einen um die Drehachse (A) zwischen einer ersten und einer zweiten Enddrehposition drehbaren Rotor (R) aufweist, der mit den Antriebsenden (31b, 41b) der beiden Torsionselemente (31, 41) so kinematisch gekoppelt ist, dass er durch Erwärmung des einen Torsionselements (31) in einer ersten Drehrichtung und durch Erwärmung des anderen Torsionselements (41) in einer entgegengesetzten zweiten Drehrichtung gedreht wird, und dass der Drehstellantrieb selbsttätig wirkende lösbare kraftschlüssige Drehsperrmittel (55, 56, 57, 58) aufweist, welche den Rotor (R) in seiner momentanen Drehposition festhalten, wenn die elektrischen Heizmittel (21, 22) nicht mit Strom beaufschlagt sind, und welche über die Torsionselemente (31, 41) lösbar sind, wenn deren zugeordnete Heizmittel (21, 22) mit Strom beaufschlagt sind.

2. Drehstellantrieb nach Anspruch 1, **dadurch gekennzeichnet, dass** die Drehsperrmittel zwei gegensinnig wirkende, mit dem Rotor (R) gekoppelte Sperrfedern (57, 58) umfassen, die eine Drehung des Rotors (R) in je einer Drehrichtung blockieren.

3. Drehstellantrieb nach Anspruch 2, **dadurch gekennzeichnet, dass** die Drehsperrmittel zwei zum Rotor (R) koaxiale, bezüglich des Stators (G) ortsfeste Sperrhülsen (55, 56) aufweisen und dass die Sperrfedern (57, 58) straff um je eine der beiden Sperrhülsen (55, 56) gewickelt sind und im Reibschluss auf den Sperrhülsen (55, 56) relativ zu diesen unbeweglich sitzen, wobei die Sperrfedern (57, 58) jeweils ein erstes und ein zweites Ende (57a, 57b, 58a, 58b) aufweisen und wobei durch Bewegung des ersten oder zweiten Endes der Sperrfedern entgegen deren Wickelrichtung der Sitz der Sperrfedern (57, 58) auf den Sperrhülsen (55, 56) soweit lockerbar ist, dass sich die Sperrfedern (57, 58) auf den Sperrhülsen (55, 56) relativ zu diesen drehen lassen.

4. Drehstellantrieb nach Anspruch 3, **dadurch gekennzeichnet, dass** jeweils das erste Ende (57a, 58a) der Sperrfedern (57, 58) im Rotor (R) eingespannt ist und jeweils das zweite Ende (57b, 58b) der Sperrfedern (57, 58) über je eines der beiden Torsionselemente (31, 41) in Umfangsrichtung entgegen dem jeweiligen Wickelsinn der Sperrfedern relativ zum ersten Ende (57a, 58a) begrenzt bewegbar ist, wobei jeweils durch eine Bewegung des zweite Endes (57b, 58b) der Sitz der Sperrfeder (57, 58) auf der Sperrhülse (55, 56) soweit gelockert wird, dass sich die Sperrfeder (57, 58) auf der Sperrhülse (55, 56) relativ zu dieser drehen lässt.

5. Drehstellantrieb nach einem der vorangehenden Ansprüche, **dadurch gekennzeichnet, dass** er Kupplungsmittel (10, 50, 60) zur Drehverbindung der Torsionselemente (31, 41) mit dem Rotor (R) aufweist, und dass die Kupplungsmittel (10, 50, 60) dazu ausgebildet sind, den Rotor (R) von den Torsionselementen (31, 41), wenn deren zugeordnete Heizmittel (21, 22) nicht mit Strom beaufschlagt sind, so zu entkoppeln, dass sich auf den Rotor (R) einwirkende äussere Drehmomente nicht auf die Torsionselemente (31, 41) übertragen.

6. Drehstellantrieb nach einem der vorangehenden Ansprüche, **dadurch gekennzeichnet, dass** an den Antriebsenden (31b, 41b) der beiden Torsionselemente (31, 41) je eine Mitnehmerscheibe (50, 60) drehfest verbunden angeordnet ist, dass die Mitnehmerscheiben (50, 60) und der Rotor (R) je mindestens einen Mitnehmernocken (13, 14, 51, 52, 61, 62) aufweisen und dass der Rotor (R) über diese Mitnehmernocken (13, 14, 51, 52, 61, 62) mit den Mitnehmerscheiben (50, 60) kinematisch koppelbar ist.

7. Drehstellantrieb nach Anspruch 6, **dadurch gekennzeichnet, dass** sich die Mitnehmernocken (51, 52, 61, 62) der Mitnehmerscheiben (50, 60) radial auswärts erstrecken und dass sich der mindestens eine Mitnehmernocken (13, 14) des Rotors (R) radial einwärts erstreckt.

8. Drehstellantrieb nach Anspruch 6 oder 7, **dadurch gekennzeichnet, dass** die Mitnehmerscheiben (50, 60) koaxial und benachbart angeordnet sind und je zwei Anschlagnocken (53, 54, 63, 64) aufweisen, die sich von den Mitnehmerscheiben (50, 60) weg in Richtung auf die jeweils andere Mitnehmerscheibe (50, 60) hin erstrecken und gegenseitige Drehwegbegrenzungen der beiden Mitnehmerscheiben (50, 60) bilden.

9. Drehstellantrieb nach einem der vorangehenden Ansprüche, **dadurch gekennzeichnet, dass** er zwei Kraftkompensationsfedern (71, 72) zur Zurückführung der beiden Torsionselemente (31, 41) in ihre jeweilige Kalt-Form aufweist.

10. Drehstellantrieb nach Anspruch 9, **dadurch gekennzeichnet, dass** die Kraftkompensationsfedern (71, 72) einerseits bezüglich des Stators (G) ortsfest gehalten und anderseits mit je einer der beiden Mitnehmerscheiben (50, 60) mitdrehbar verbunden sind, wobei die Kraftkompensationsfedern (71, 72) mittels der Mitnehmerscheiben (50, 60) spannbar sind und anderseits die Mitnehmerscheiben (50, 60) durch Entspannung der Kraftkompensationsfedern (71, 72) drehend antreibbar sind.

## Claims

1. Rotary actuating drive for a rotary component, having a stator (G) and two oppositely acting rotary actuators in the form of two string-like torsion elements (31,41) which are substantially coaxial with respect to a rotation axis (A), each having a clamping end (31a, 41a) that is fixed with respect to the stator (G), and a drive end (31b, 41b), the torsion elements (31, 41) consisting of a shape-memory alloy and, when heated, changing continuously from a first memorised shape into a second memorised shape, the drive end (31b, 41b) in each case rotating about the rotation axis (A) relative to the clamping end (31a, 41a), and having two electrical heating means (21, 22), each associated with one of the two torsion elements (31, 41), for heating the two torsion elements (31,41) independently of one another, **characterised in that** the rotary actuating drive comprises a rotor (R) which is rotatable about the rotation axis (A) between a first and a second rotated position, said rotor being kinematically coupled to the drive ends (31b, 41b) of the two torsion elements (31, 41) such that as a result of the heating of one torsion element (31) it is rotated in a first direction of rotation and as a result of the heating of the other torsion element (41) it is rotated in a second, opposite, direction of rotation, and **in that** the rotary actuating drive comprises automatically acting, releasable, frictionally engaging rotation locking means (55, 56, 57, 58) which secure the rotor (R) in its present position of rotation when the electrical heating means (21, 22) are not supplied with current, and which are releasable by means of the torsion elements (31, 41) when their associated heating means (21, 22) are supplied with current.

2. Rotary actuating drive according to claim 1, **characterised in that** the rotation locking means comprise two oppositely acting locking springs (57, 58) coupled to the rotor (R), each of which blocks rotation of the rotor (R) in one direction of rotation.

3. Rotary actuating drive according to claim 2, **characterised in that** the rotation locking means comprise two locking sleeves (55, 56) which are coaxial with respect to the rotor (R) and fixed in relation to the stator (G) and **in that** the locking springs (57, 58) are each tightly wound around one of the two locking sleeves (55, 56) and are located in frictional engagement on the locking sleeves (55, 56) so as to be immovable relative thereto, the locking springs (57, 58) each comprising a first and a second end (57a, 57b, 58a, 58b) and as a result of movement of the first or second end of the locking springs counter to their winding direction the fit of the locking springs (57, 58) on the locking sleeves (55, 56) can be loosened to such an extent that the locking springs (57, 58) on the locking sleeves (55, 56) are able to rotate relative to the latter.

4. Rotary actuating drive according to claim 3, **characterised in that** the first end (57a, 58a) of the locking springs (57, 58) is clamped in the rotor (R) and the second end (57b, 58b) of the locking springs (57, 58) is circumferentially movable to a limited extent relative to the first end (57a, 58a), counter to the particular direction of winding of the locking springs, via one of the two torsion elements (31, 41), while as a result of a movement of the second end (57b, 58b) the fit of the locking spring (57, 58) on the locking sleeve (55, 56) is loosened to such an extent that the locking spring (57, 58) on the locking sleeve (55, 56) can be rotated relative to the latter.

5. Rotary actuating drive according to one of the preceding claims, **characterised in that** it comprises coupling means (10, 50, 60) for rotationally connecting the torsion elements (31, 41) to the rotor (R), and **in that** the coupling means (10, 50, 60) are configured so as to disconnect the rotor (R) from the torsion elements (31,41) when the associated heating means (21, 22) are not supplied with current, such that external torques acting on the rotor (R) are not transmitted to the torsion elements (31, 41).

6. Rotary actuating drive according to one of the preceding claims, **characterised in that** a driving disc (50, 60) is arranged at the drive ends (31b, 41b) of each of the two torsion elements (31, 41) so as to be connected for rotation therewith, **in that** the driving discs (50, 60) and the rotor (R) each comprise at least one driving cam (13, 14, 51, 52, 61, 62), and **in that** the rotor (R) can be kinematically coupled to the driving discs (50, 60) via these driving cams (13, 14, 51, 52, 61, 62).

7. Rotary actuating drive according to claim 6, **characterised in that** the driving cams (51, 52, 61, 62) of the driving discs (50, 60) extend radially outwards and **in that** the at least one driving cam (13, 14) of the rotor (R) extends radially inwards.

8. Rotary actuating drive according to claim 6 or 7, **characterised in that** the driving discs (50, 60) are arranged coaxially and adjacent to one another and each comprise two contact cams (53, 54, 63, 64) which extend away from the driving discs (50, 60) towards the other driving disc (50, 60) in each case, and form mutual rotation limiters for the two driving discs (50, 60).

9. Rotary actuating drive according to one of the preceding claims, **characterised in that** it comprises two force compensating springs (71, 72) for returning the two torsion elements (31, 41) to their respective cold shape.

10. Rotary actuating drive according to claim 9, **characterised in that**, on the one hand, the force compensating springs (71, 72) are fixedly secured with respect to the stator (G), and on the other hand they are each connected for rotation with one of the two driving discs (50, 60), while the force compensating springs (71, 72) can be tensioned by means of the driving discs (50, 60) and on the other hand the driving discs (50, 60) can be rotationally driven by the relaxation of the force compensating springs (71, 72).

## Revendications

1. Actuateur rotatif pour un composant rotatif, comprenant un stator (G) et deux actionneurs rotatifs, sensiblement coaxiaux à un axe de rotation (A) et agissant en sens opposés, sous la forme de deux éléments de torsion (31, 41) en forme de barreaux, comprenant chacun une extrémité d'encastrement (31a, 41a) stationnaire par rapport au stator (G) et comprenant chacun une extrémité d'entraînement (31b, 41b), dans lequel les éléments de torsion (31, 41) sont en un alliage à mémoire de forme et se transforment en continu par échauffement chacun depuis une première forme mémorisée jusque dans une seconde forme mémorisée, l'extrémité d'entraînement (31b, 41b) tournant respectivement autour de l'axe de rotation (A) par rapport à l'extrémité d'encastrement (31a, 41a), et comprenant deux organes de chauffage électrique (21, 22) respectivement associés à l'un des deux éléments de torsion (31, 41) et destinés à réchauffer les deux éléments de torsion (31, 41) indépendamment l'un de l'autre, **caractérisé en ce que** l'actuateur rotatif comprend un rotor (R) en rotation autour de l'axe de rotation (A) entre une première position de rotation finale et une seconde position de rotation finale, le rotor étant couplé sur le plan cinématique avec les extrémités d'entraînement (31b, 41b) des deux éléments de torsion (31, 41) de telle façon que, par échauffement de l'un des éléments de torsion (31) il est tourné dans une première direction de rotation et, par échauffement de l'autre élément de torsion (41) il est tourné dans une seconde direction de rotation opposée, et **en ce que** l'actuateur rotatif comprend des moyens de blocage de rotation (55, 56, 57, 58) à coopération de forces, libérables et à action automatique, qui retiennent le rotor (R) dans sa position de rotation momentanée quand les organes de chauffage électrique (21, 22) ne sont pas alimentés en courant, et qui sont libérables via les éléments de torsion (31, 41) quand leurs organes de chauffage électrique (21, 22) sont alimentés en courant.

2. Actuateur rotatif selon la revendication 1, **caractérisé en ce que** les moyens de blocage de rotation incluent deux ressorts de blocage (57, 58) agissant en sens opposé et couplés au rotor (R), qui bloquent une rotation du rotor (R) chacun dans une direction de rotation.

3. Actuateur rotatif selon la revendication 2, **caractérisé en ce que** les moyens de blocage de rotation comprennent deux douilles de blocage (55, 56) coaxiales au rotor (R) et stationnaires par rapport au stator (G), et **en ce que** les ressorts de blocage (57, 58) sont enroulés serrés respectivement autour de l'une des deux douilles de blocage (55, 56) et sont posés sur les douilles de blocage (55, 56) de façon immobile par rapport à celles-ci par coopération de friction, dans lequel les ressorts de blocage (57, 58) comprennent chacun une première extrémité et une seconde extrémité (57a, 57b, 58a, 58b) et dans lequel, par déplacement de la première ou de la seconde extrémité des ressorts de blocage en sens contraire à leur direction d'enroulement la pose des ressorts de blocage (57, 58) sur les douilles de blocage (55, 56) peut être desserrée dans une mesure telle que les ressorts de blocage (57, 58) peuvent être tournés sur les douilles de blocage (55, 56) par rapport à celles-ci.

4. Actuateur rotatif selon la revendication 3, **caractérisé en ce que** la première extrémité (57a, 58a) des ressorts de blocage (57, 58) est encastrée dans le rotor (R) et la seconde extrémité (57b, 58b) des ressorts de blocage (57, 58) est déplaçable respectivement via l'un des deux éléments de torsion (31, 41) en direction périphérique et à l'encontre du sens d'enroulement respectif des ressorts de blocage de manière limitée par rapport à la première extrémité (57a, 58a), dans lequel grâce à un déplacement de la seconde extrémité (57b, 58b) la pose du ressort de blocage (57, 58) sur la douille de blocage (55, 56) peut être desserrée dans une mesure telle que le ressort de blocage (57, 58) peut être tourné sur la douille de blocage (55, 56) par rapport à celle-ci.

5. Actuateur rotatif selon l'une des revendications précédentes, **caractérisé en ce qu'**il comprend un moyen d'accouplement (10, 50, 60) pour la liaison en rotation des éléments de torsion (31, 41) avec le rotor (R), et **en ce que** le moyen d'accouplement (10, 50, 60) est réalisé pour découpler le rotor (R) vis-à-vis des éléments de torsion (31, 41) quand leurs organes de chauffage associés (21, 22) ne sont pas alimentés en courant, de telle façon que des couples de rotation extérieurs agissant sur le rotor (R) ne sont pas transmis aux éléments de torsion (31, 41).

6. Actuateur rotatif selon l'une des revendications précédentes, **caractérisé en ce qu'**un disque d'entraînement (50, 60) respectif est agencé en liaison solidaire en rotation aux extrémités d'entraînement (31b, 41b) des deux éléments de torsion (31, 41), **en ce que** les disques d'entraînement (50, 60) et le rotor (R) comprennent chacun au moins une came d'entraînement (13, 14, 51, 52, 61, 62), et **en ce que** le rotor (R) est susceptible d'être couplé sur le plan cinématique avec les disques l'entraînement (50, 60) via ces cames d'entraînement (13, 14, 51, 52, 61, 62).

7. Actuateur rotatif selon la revendication 6, **caractérisé en ce que** les cames d'entraînement (51, 52, 61, 62) des disques d'entraînement (50, 60) s'étendent radialement vers l'extérieur, et **en ce que** ladite au moins une came d'entraînement (13, 14) du rotor (R) s'étend radialement vers l'intérieur.

8. Actuateur rotatif selon la revendication 6 ou 7, **caractérisé en ce que** les disques d'entraînement (50, 60) sont agencés coaxialement et de manière voisine, et comprennent chacun deux cames de butée (53, 54, 63, 64), qui s'étendent depuis les disques d'entraînement (50, 60) en éloignement en direction de l'autre disque d'entraînement (50, 60) respectif, et forment des limitations de course de rotation réciproques des deux disques d'entraînement (50, 60).

9. Actuateur rotatif selon l'une des revendications précédentes, **caractérisé en ce qu'**il comprend deux ressorts de compensation de force (71, 72) pour ramener les deux éléments de torsion (31, 41) jusque dans leurs formes respectives à froid.

10. Actuateur rotatif selon la revendication 9, **caractérisé en ce que** les ressorts de compensation de force (71, 72) sont maintenus d'une part stationnaires par rapport au stator (G) et sont d'autre part reliés conjointement en rotation respectivement à l'un des deux disques d'entraînement (50, 60), et les ressorts de compensation de force (71, 72) peuvent être bandés au moyen des disques d'entraînement (50, 60), les disques d'entraînement (50, 60) pouvant d'autre part être entraînés en rotation par détente des ressorts de compensation de force (71, 72).
